# EUROPEAN PATENT APPLICATION

(11) **EP 1 401 135 A1**
(43) Date of publication of application: **24.03.2004**
(21) Application number: 02741317.8
(22) Date of filing: 26.06.2002
(51) Int. Cl.: H04J 13/00

(54) **RADIO TRANSMITTER AND REDIO RECEIVER**

(30) Priority: 27.06.2001 JP 2001195473
(71) Applicant: MATSUSHITA ELECTRIC INDUSTRIAL CO., LTD., Kadoma-shi, Osaka 571-8501 (JP)
(72) Inventor: MIYOSHI, Kenichi, Kanazawa-ku, Yokohama-shi, Kanagawa 236- (JP)
(74) Representative: Grünecker, Kinkeldey, Stockmair & Schwanhäusser Anwaltssozietät
(86) International application number: PCT/JP2002/006388
(87) International publication number: WO 2003/003635

(57) **Abstract**

A radio transmission apparatus capable of preventing a reduction of the capacity of a downlink and preventing an increase of interference inside or outside a cell involved in transmission of MCS information. In this radio transmission apparatus, the spreading code specification section 112 specifies combinations of spreading codes that will express MCS numbers. For example, the spreading code specification section 112 specifies 7 codes out of spreading codes #1 to #8. That is, if the selected MCS number is #1, the spreading code specification section 112 specifies spreading codes #2 to #8 and does not specify spreading code #1. This allows combinations of spreading codes to carry information on MCS#1 to #8. Since power corresponding to unused spreading codes is not detected through power detection of a despread signal on the receiving side, the spreading code number can be determined as the MCS number.

## Description

### Technical Field

The present invention relates to a radio transmission apparatus and radio reception apparatus used for a digital radio communication system.

### Background Art

As a method for efficiently transmitting high-speed packets, HSDPA (High Speed Down-Link Packet Access) is under study by the 3GPP (3rd Generation Partnership Project). This system changes a transmission rate by changing channel CODEC, spreading ratio, multiplexing number or (multi-value) modulation, etc., according to a channel condition and thereby improves an average throughput.

When performing adaptive modulation such as HSDPA, a transmitter (radio base station) needs to transmit an MCS (Modulation and Coding Scheme) to a receiver (communication terminal). The MCS is information on a modulation system of packet data being transmitted (QAM (Quadrature Amplitude Modulation), QPSK (Quadrature Phase Shift Keying), 8PSK (8 Phase Shift Keying), etc.) and coding rate (R = 1/2, 1/3), etc. The receiver demodulates data of a packet channel and carries out decoding processing using this MCS information.

However, the transmitter side (radio base station) transmits the MCS information, which involves a problem of reducing the capacity of a downlink. This also involves a problem of increasing interference inside or outside a cell involved in transmission of the MCS information.

### Disclosure of Invention

It is an object of the present invention to provide a radio transmission apparatus and radio reception apparatus capable of preventing a reduction in the capacity of a downlink and preventing an increase inside or outside a cell involved in transmission of the MCS information.

According to an embodiment of the present invention, a radio transmission apparatus comprises a transmission target assignment section that assigns a transmission target based on downlink channel quality information sent over an uplink, a parameter determining section that determines transmission parameters based on the downlink channel quality information reported from the transmission target, a spreading code specification section that specifies combinations of spreading codes expressing the transmission parameters and a transmission section that sends data to the transmission target using the transmission parameters and the combinations of spreading codes through multi-code transmission.

According to another embodiment of the present invention, a radio reception apparatus comprises a despreading section that carries out despreading processing on a downlink signal using combinations of spreading codes expressing transmission parameters and outputs a despread signal, a level detection section that detects the level of the despread signal, a transmission parameter detection section that detects the transmission parameters from the level and a received data output section that obtains received data using the transmission parameters.

According to a further embodiment of the present invention, a radio transmission method comprises a transmission target assigning step of assigning a transmission target based on downlink channel quality information sent over an uplink, a parameter determining step of determining transmission parameters based on the downlink channel quality information reported from the transmission target, a spreading code specifying step of specifying combinations of spreading codes expressing the transmission parameters and a transmitting step of transmitting data to the transmission target using the transmission parameters and the combinations of spreading codes through multi-code transmission.

According to a still further embodiment of the present invention, a radio reception method comprises a despreading step of carrying out despreading processing on a downlink signal using combinations of spreading codes expressing transmission parameters and outputting a despread signal, a level detecting step of detecting the level of the despread signal, a transmission parameter detecting step of detecting the transmission parameters from the level and a received data outputting step of obtaining received data using the transmission parameters.

According to a still further embodiment of the present invention, a radio transmission apparatus comprises a parameter determining section that determines transmission parameters based on downlink channel quality information reported from a transmission target over an uplink, a spreading code specification section that specifies combinations of spreading codes expressing the transmission parameters and a transmission section that sends data to the transmission target using the transmission parameters and the combinations of spreading codes through multi-code transmission.

According to a still further embodiment of the present invention, a radio transmission method comprises a parameter determining step of determining transmission parameters based on downlink channel quality information reported from a transmission target over an uplink, a spreading code specifying step of specifying combinations of spreading codes expressing the transmission parameters and a transmitting step of transmitting data to the transmission target using the transmission parameters and the combinations of spreading codes through multi-code transmission.

### Brief Description of Drawings

FIG.1 is a block diagram showing a configuration of a radio base station apparatus provided with a radio transmission apparatus according to Embodiment 1 of the present invention;
FIG.2 is a block diagram showing a configuration of a communication terminal apparatus provided with a radio reception apparatus according to Embodiment 1 of the present invention;
FIG.3 illustrates the content of an MCS;
FIG.4 illustrates a table that shows the correspondence between MCS and spreading codes used in Embodiment 1 of the present invention;
FIG.5 illustrates spreading code detection by the radio reception apparatus according to Embodiment 1 of the present invention;
FIG.6 illustrates a state of usage of spreading codes in another example of Embodiment 1 of the present invention;
FIG.7 is a block diagram showing a configuration of a radio base station apparatus provided with a radio transmission apparatus according to Embodiment 2 of the present invention;
FIG.8 is a block diagram showing a configuration of a communication terminal apparatus provided with a radio reception apparatus according to Embodiment 2 of the present invention;
FIG.9 is a block diagram showing a configuration of a radio base station apparatus provided with a radio transmission apparatus according to Embodiment 3 of the present invention;
FIG.10 is a block diagram showing a configuration of a communication terminal apparatus provided with a radio reception apparatus according to Embodiment 3 of the present invention;
FIG.11 illustrates a reference table that associates multiplexed users with identification bits used in Embodiment 3 of the present invention; and
FIG.12 illustrates multiplexed user information.

### Best Mode for Carrying out the Invention

With reference now to the attached drawings, embodiments of the present invention will be explained in detail below.

### (Embodiment 1)

This embodiment will describe a case where MCS information is transmitted using combinations of spreading codes used for transmission of packet data.

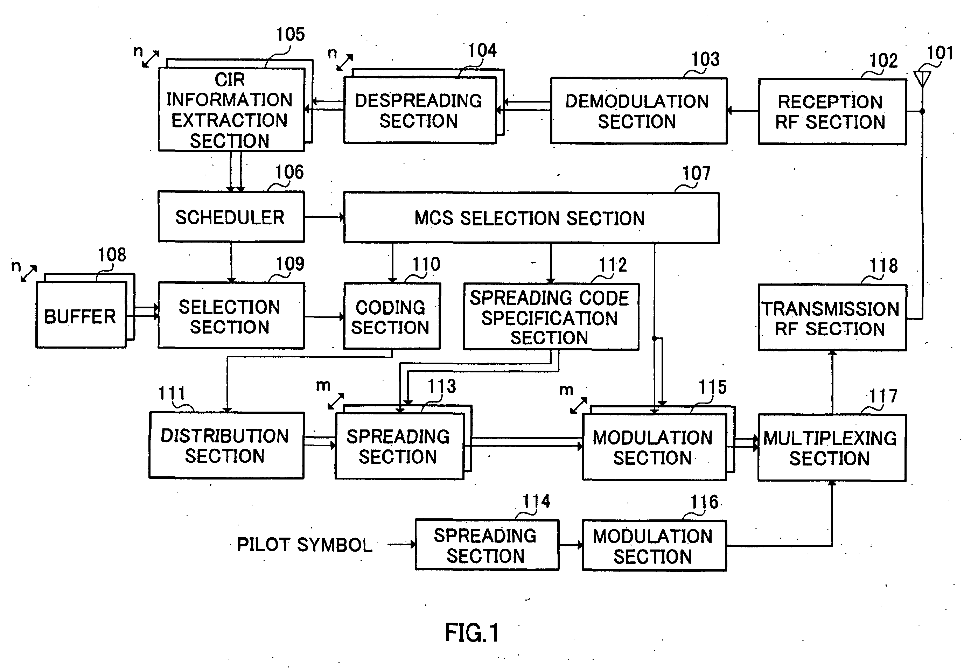

FIG.1 is a block diagram showing a configuration of a radio base station apparatus provided with a radio transmission apparatus according to Embodiment 1 of the present invention. For simplicity of explanation, a case where the number of users is 2 will be explained, but there is no particular limitation to the number of users. Furthermore, this embodiment will describe a case where packet data is sent using 7 spreading codes of ×16 spreading through multi-code transmission, but there is no particular limitation to the spreading ratio and the number of spreading codes.

An uplink signal sent from a communication terminal is receivedby a reception RF section 102 through an antenna 101. The reception RF section 102 carries out, predetermined radio reception processing (e.g., down-conversion, A/D conversion, etc.) on the uplink signal and outputs the signal after the radio reception processing to a demodulation section 103.

The demodulation section 103 carries out orthogonal demodulation processing on the signal after the radio reception processing and outputs the signal after the orthogonal demodulation processing to a despreading section 104. The despreading section 104 carries out despreading processing on the signal after the orthogonal demodulation processing using spreading codes used on the communication terminal side. There are despreading sections 104 corresponding in number to the users (n). The signals after the despreading processing (despread signals) are output to CIR information extraction sections 105 corresponding in number to the users (n).

The CIR information extraction sections 105 extract CIR (Carrier to Interference Ratio) information from the despread signals as downlink channel quality information. The extracted CIR information is output to a scheduler 106. CIR information from all communication terminals is output to the scheduler 106. The scheduler 106 assigns transmission targets (users) to which transmission is carried out over the downlink based on the CIR information from the respective communication terminals. The scheduling information determined in this way is output to an MCS selection section 107 and selection section 109.

The MCS selection section 107 determines transmission parameters such as a modulation system and coding rate for each user and outputs the transmi'ssion parameters as MCS information to a coding section 110, a spreading code specification section 112 and a modulation section 115. The spreading code specification section 112 specifies spreading codes in such a way that combinations of spreading codes carry the MCS information and outputs the specified spreading codes to respective spreading sections 113.

The selection section 109 selects transmission data from buffers 108 corresponding in number to the users (n) according to the scheduling information and outputs the transmission data to the coding section 110. The selection section 109 outputs the transmission data for the users to whom coded transmission data is assigned from the buffer 108 to the coding section 110.

The coding section 110 codes transmission data for each user at a coding rate of the MCS information. The coded transmission data is output to a distribution section 111. The distribution section 111 outputs the coded transmission data to spreading sections 113 corresponding in number to the spreading codes (m).

The respective spreading sections 113 carry out spreading/modulation processing on the coded transmission data using the spreading codes specified by the a spreading code specification section 112. The signal after spreading/modulation processing is output to modulation sections 115 corresponding in number to the spreading codes (m). The modulation sections 115 carry out orthogonal modulation processing on the spread/modulated signals and output the signals after the orthogonal modulation processing to a multiplexing section 117.

A pilot symbol, which is a known signal, is output to a spreading section 114 and subjected to spreading/modulation processing at the spreading section 114 using a predetermined spreading code. The pilot symbol subjected to the spreading/modulation processing is output to a modulation section 116 and subjected to orthogonal modulation processing at the modulation sect ion 116. The pilot symbol subjected to the orthogonal modulation processing is output to the multiplexing section 117.

The multiplexing section 117 multiplexes the transmission data subjected to the spreading/modulation processing and the pilot symbol and outputs the multiplexed signal to a transmission RF section 118. The transmission RF section 118 carries out predetermined radio transmission processing (e.g., D/A conversion and up-conversion, etc.) on the multiplexed signal and sends the signal after the radio transmission processing as a downlink signal to a communication terminal through the antenna 101.

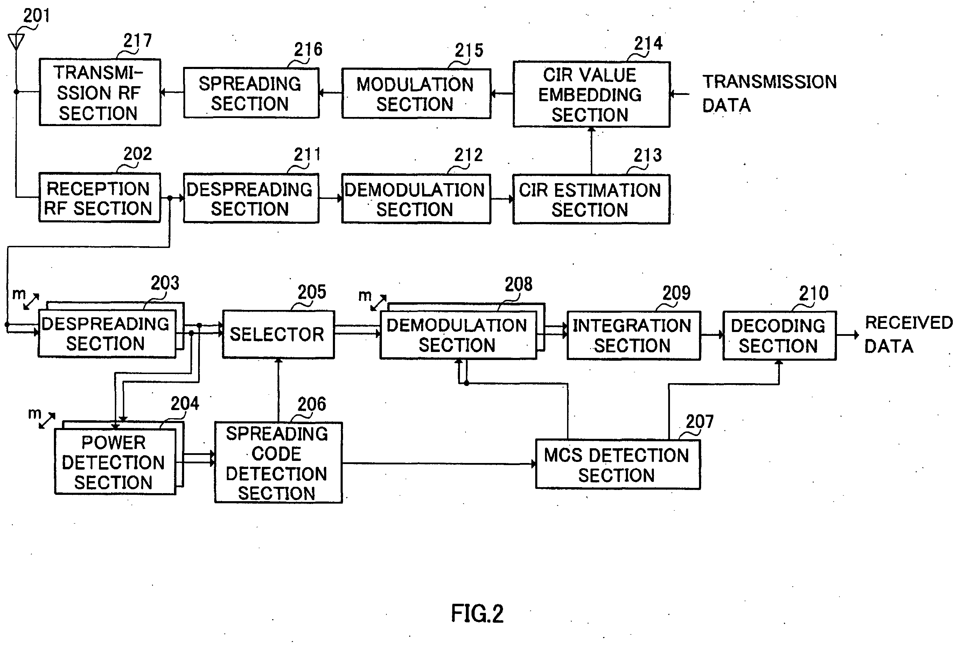

FIG.2 is a block diagram showing a configuration of a communication terminal apparatus provided with a radio reception apparatus according to Embodiment 1 of the present invention. Here, a case where packet data is sent using 7 spreading codes of ×16 spreading through multi-code transmission will be explained, but there is no particular limitation to the spreading ratio and the number of spreading codes.

The downlink signal sent from the radio base station is receivedbya reception RF section 202 through an antenna 201. The reception RF section 202 carries out predetermined radio reception processing (e.g., down-conversion andA/D conversion, etc.) on the downlink signal and outputs the signal after the radio reception processing to despreading sections 203, 211.

There are despreading sections 203 corresponding in number to the spreading codes (m) and these despreading sections 203 carry out despreading processing on the signals after the radio reception processing using the spreading codes used at the radio base station. The signals after the despreading processing (despread signals) are output to power detection sections 204 corresponding in number to the spreading codes (m) and at the same time output to a selector 205.

The power detection sections 204 detect power of the respective despread signals according to the respective spreading codes. The respective power detection results are output to a spreading code detection section 206. The spreading code detection section 206 detects the spreading codes from the power detection results and outputs the spreading code detection results to an MCS detection section 207 and the selector 205.

The selector 205 selects a despread signal despread by a spreading code whose power value reaches a predetermined level and outputs the despread signal to demodulation sections 208 corresponding in number to the spreading codes (m).

The MCS detection section 207 detects an MCS carried in the combinations of spreading codes and outputs the MCS information to the demodulation sections 208 corresponding in number to the spreading codes (m) and decoding section 210.

The demodulation sections 208 carry out demodulation processing according to a modulation system included in the MCS information from the MCS detection section 207 using despread signals and output the signals after the demodulation processing to an integration section 209.

The integration section 209 integrates the signals sent through multi-code transmission and outputs the integrated signal to a decoding section 210. The decoding section 210 carries out decoding processing at a coding rate included in the MCS information fromtheMCS detection section 207 and outputs received data.

The despreading section 211 carries out despreading processing on the signal after the radio reception processing using the spreading code used for the pilot symbol at the radio base station and outputs the signal after the despreading processing (despread signal) to a demodulation section 212. The demodulation section 212 carries out demodulation processing on the despread signal and outputs the signal after the demodulation processing to a CIR estimation section 213.

The CIR estimation section 213 estimates a CIR using the demodulated pilot symbol. The estimated CIR value is output to a CIR value embedding section 214. The CIR value embedding section 214 embeds a CIR value in the transmission data and outputs the transmission data to a modulation section 215.

The modulation section 215 carries out modulation processing on the transmission data with the CIR value embedded and outputs the signal after the modulation processing to spreading section 216. The spreading section 216 carries out spreading/modulation processing on the signal after modulation processing using a predetermined spreading code and outputs the signal after the spreading/modulation processing to a transmission RF section 217.

The transmission RF section 217 carries out predetermined radio transmission processing (e.g., D/A conversion and up-conversion, etc.) on the signal after the spreading/modulation processing and sends the signal after the radio transmission processing as an uplink signal to the radio base station through the antenna 201.

Next, a case where an HSDPA-based communication is carried out between the radio base station apparatus and communication terminal apparatus in the above-described configuration without transmitting MCS information will be explained.

First, CIR information is sent as downlink channel quality information from each communication terminal under the control of the radio base station to the radio base station over the uplink. More specifically, a downlink signal from the radio base station is received by each communication terminal, a pilot symbol which is a known signal included in the downlink signal is demodulated by the demodulation section 212 and the pilot symbol is usedby the CIR estimation section 213 to estimate the CIR. Then, this CIR value is output to the CIR embedding section 214 and the CIR embedding section 214 embeds the CIR value in transmission data. Each communication terminal sends this CIR value to the radio base station over the uplink.

The radio base station extracts the CIR information at the CIR information extraction section 105 using the uplink signal. Since the CIR information extraction section 105 is provided for each communication terminal, the CIR information on all communication terminals is obtained. Each piece of the CIR information obtained is output to the scheduler 106.

The scheduler 106 estimates the channel quality of the downlink corresponding to each communication terminal based on the CIR information from each communication terminal and assigns a channel to the communication terminal which is a transmission target. The information on the communication terminal assigned is output to the MCS selection section 107. The MCS selection section 107 selects an MCS for each communication terminal. That is, the MCS selection section 107 selects transmission parameters such as coding rate and modulation system based on the results of estimation of the channel quality of the downlink of the communication terminal. For example, if the channel quality of the downlink is good, the coding rate is increased and a higher-level multi-value modulation system is used as the modulation system, whereas if the channel quality of the downlink is bad, the coding rate is lowered and a modulation system such as QPSK is used as the modulation system.

The information on the coding rate and modulation system determined by this MCS selection is output to the coding section 110 and modulation section 115, respectively. The packet data for the communication terminal is coded at the determined coding rate, modulated by the determined modulation system and sent to the communication terminal over the downlink.

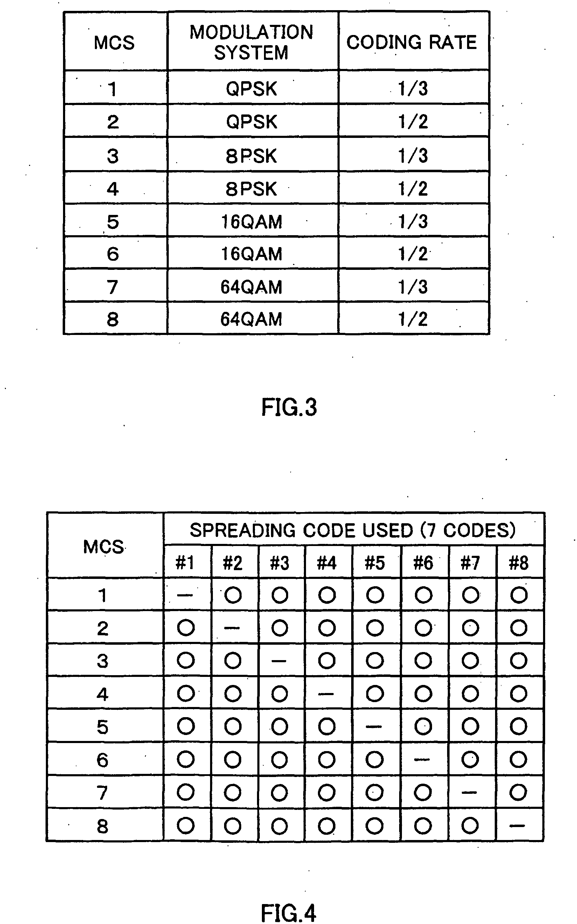

Furthermore, the MCS number determined by the MCS selection section 107 is output to the spreading code specification section 112. The MCS selection section 107 is provided with a correspondence table as shown in FIG. 3, determines transmission parameters corresponding to the assigned communication terminal and outputs the MCS number corresponding to the transmission parameters to the spreading code specification section 112.

The spreading code specification section 112 specifies combinations of spreading codes that will expressMCS numbers. This will be explained, for example, using FIG.4 assuming a case where a DSCH (Downlink Shared CHannel) is transmitted using spreading codes #1 to #8. The spreading code specification section 112. specifies 7 codes out of spreading codes #1 to #8. That is, if the selected MCS number is #1, the spreading code specification section 112 specifies spreading codes #2 to #8 and does not specify spreading code #1. On the other hand, if the selected MCS number is #2, the spreading code specification section 112 specifies spreading codes #1, #3 to #8 and does not specify spreading code #2.

In the case using FIG.4, there are ₈C₇, that is, 8 combinations of spreading codes. Thus, MCS information, which is transmission parameters, can be expressed with combinations of spreading codes. That is, information of MCS#1 to #8 can be carried on combinations of spreading codes. Therefore, using spreading codes specified in this way allows the receiving side (communication terminal) to decide MCS blindly without sending MCS information.

The spreading code information specified by the spreading code specification section 112 is output to the spreading sections 113 corresponding in number to the spreading codes (m). The spreading sections 113 carry out spreading/modulation processing on the transmission data distributed by the distribution section 111 using spreading codes specified respectively. For example, assuming that MCS#5 is used, spreading/modulation processing is carried out using 7 spreading codes #1 to #4 and #6 to #8. The transmission data subjected to spreading/modulation processing by these spreading codes is multiplexed for 7 codes by the multiplexing section 117 and sent to the communication terminal as a downlink signal through multi-code transmission.

The communication terminal carries out despreading processing on the downlink signal at the despreading sections 203 and obtains despread signals. In this case, the despreading sections 203 carry out despreading processing on the downlink signals for the respective spreading codes #1 to #8. The despread signals are output to the power detection sections 204 according to the respective spreading codes.

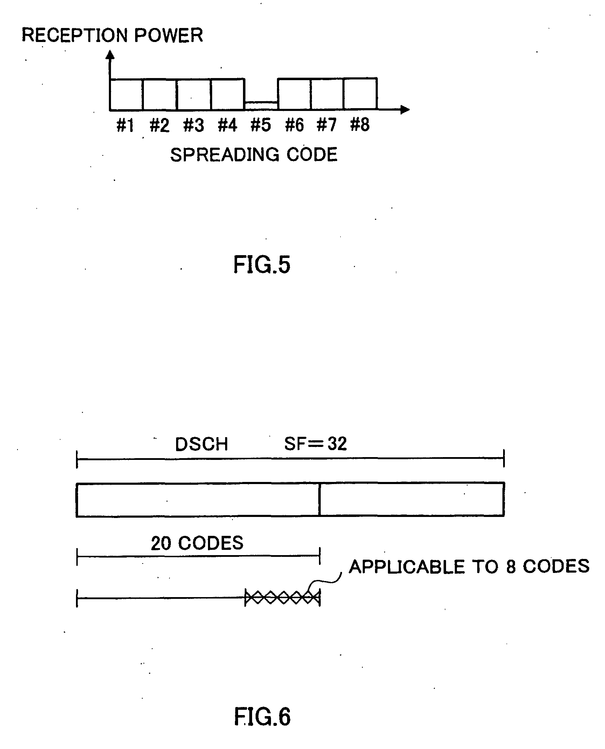

The power detection sections 204 carry out power detection using the despread signals. The information on power values of the respective spreading codes is output to the spreading code detection section 206. The spreading code detection section 206 detects the spreading code used on the transmitting side (radio base station) from the information on the power values. The radio base station uses the spreading codes #1 to #4 and #6 to #8 and does not use #5, and therefore the power detection result for the respective spreading codes is as shown in FIG.5. That is, predetermined power values are obtained for the spreading codes #1 to #4 and #6 to #8, whereas a small power value is obtained for the spreading code #5.

The information on the spreading codes used and detected in this way is output to the MCS detection section 207. Since only the spreading code #5 is unused at, the MCS detection section 207, the MCS detection section 207 decides that the MCS used is #5. The MCS detection section 207 outputs information on transmission parameters (modulation system and coding rate) corresponding to MCS#5 to the demodulation section 208 and decoding section 210. More specifically, the MCS detection section 207 is provided with the correspondence table shown in FIG.3 and outputs a modulation system and coding rate corresponding to the MCS number (#5) to the demodulation section 208 and the decoding section 210 respectively.

The selector 205 selects despread signals corresponding to the spreading codes #1 to #4 and #6 to #8 used and outputs them to the demodulation sections 208. The demodulation sections 208 demodulate the despread signals according to the modulation system output from the MCS detection section 207. Furthermore, the decoding section 210 decodes the demodulated signal at the coding rate output from the MCS detection section 207. Received data is obtained in this way.

Thus, this embodiment attaches meaning to combinations of spreading codes, that is, expresses information of transmission parameters using combinations of spreading codes, and can thereby report the MCS information to the receiving side without sending the MCS information as data.

Thus, the receiving side can decide the MCS information by only detecting the spreading codes used. As a result, there is no need to send the MCS information over the downlink, which makes it possible to increase the capacity of the downlink and reduce interference inside or outside a cell. Thus, the method of notifying the communication terminal of the MCS information using combinations of spreading codes is a reliable method and ensures that the MCS information is detected on the commutation terminal side, hence an effective method.

This embodiment has described the case where all combinations of spreading codes used are used to express MCS information, but the present invention may also be adapted in such a way as to express MCS information using some spreading codes as combinations of spreading codes. For example, as shown in FIG.6, when 32 codes are assigned to DSCH and multi-code transmission is carried out with 20 codes multiplexed, it is also possible to always use spreading codes #1 to #12 of those codes for transmission, attach meaning to only combinations of 8 spreading codes #13 to #20 and then send MCS information.

In comparison with a case where MCS information is expressed using all spreading codes on the receiving side (communication terminal), this makes it possible to reduce the number of circuits that carry out power detection from 20 to 8, and thereby simplify the configuration of the reception apparatus. By the way, this embodiment of the present invention has described the case where the number of a spreading code which is not used for transmission matches the MCS number, but it is also possible to arbitrarily set the correspondence between the number of a spreading code which is not used for transmission and the MCS number.

### (Embodiment 2)

This embodiment will describe a case where when the number of bits indicating transmission parameters is smaller than the number of bits indicating combinations of spreading codes, the bits indicating transmission parameters are coded and used as bits indicating combinations of spreading codes.

Embodiment 1 has described the case where an unused spreading code number is associated with an MCS number using 7 out of 8 spreading codes in multicode transmission, but there may also be a case where 18 out of 20 spreading codes are used in multicode transmission. In this case, there are ₂₀C₁₈, that is, 190 combinations of spreading codes. This embodiment will describe a case where 18 out of 20 spreading codes are used in multicode transmission.

As suming that there are 8 types of MCS as transmission parameters, MCS numbers can be expressed with 3 bits. In contrast, the number of combinations of spreading codes in this case is 190 and MCS numbers can be expressed with 7 bits. Thus, transmission is performed with combinations of information 7 bits instead of combinations of information 3 bits as MCS numbers.

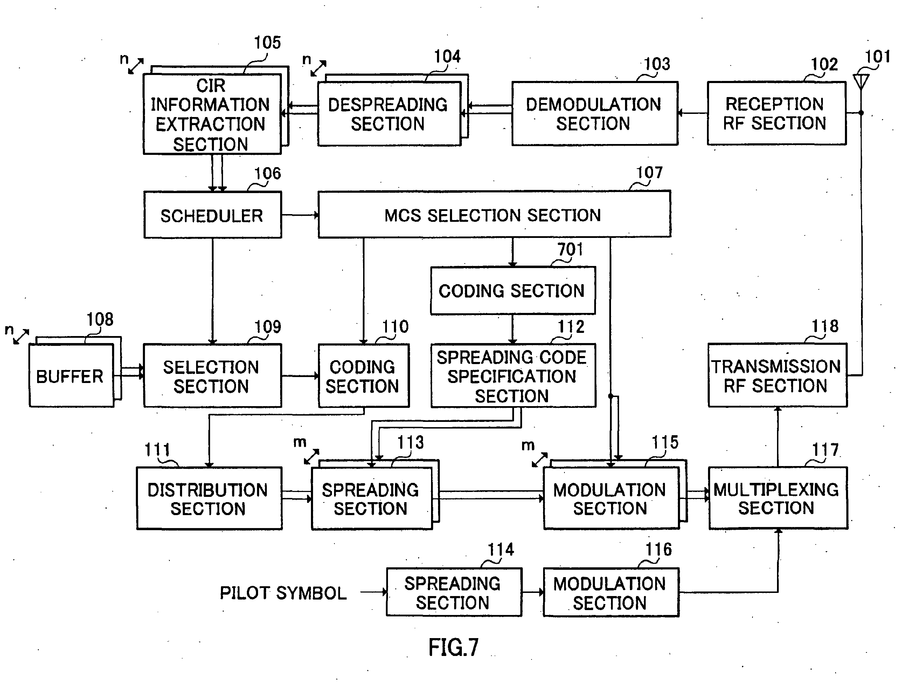

FIG.7 is a block diagram showing a configuration of a radio base station apparatus provided with a radio transmission apparatus according to Embodiment 2 of the present invention. In FIG.7, the same parts as those in FIG.1 are assigned the same reference numerals as those in FIG.1 and detailed explanations thereof will be omitted.

The radio base station apparatus shown in FIG.7 is provided with a coding section 701 that codes bits indicating MCS numbers determined by an MCS selection section 107 to bits indicating combinations of spreading codes.

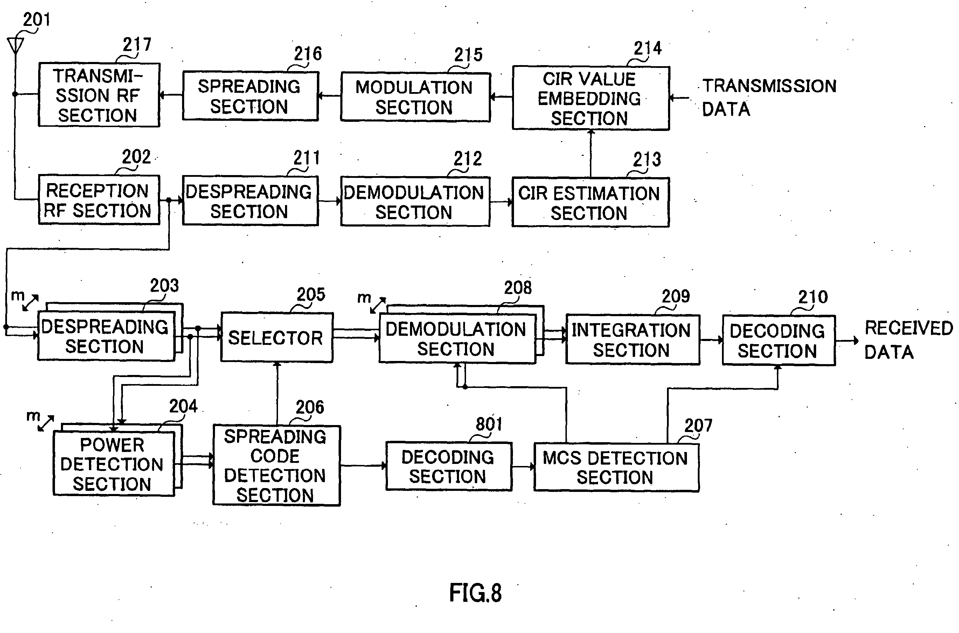

FIG.8 is a block diagram showing a configuration of a communication terminal apparatus provided with a radio reception apparatus according to Embodiment 2 of the present invention. In FIG. 8, the same parts as those in FIG.2 are assigned the same reference numerals as those in FIG.2 and detailed explanations thereof will be omitted.

The communication terminal apparatus shown in FIG. 8 is provided with a decoding section 801 that decodes the combinations of spreading codes used and detected by a spreading code detection section 206 to MCS numbers.

Here, a case where an HSDPA-based communication is carried out between the radio base station apparatus and communication terminal apparatus in the above-described configuration without transmitting MCS information will be explained.

The operation after CIR information is sent as downlink channel quality information from each communication terminal to the radio base station over the uplink until a scheduler 106 at the radio base station performs transmission assignment based on the CIR information and selects MCS according to the transmission assignment is the same as that of Embodiment 1.

An MCS number determined at an MCS selection section 107 is output to a coding section 701. For example, as shown in FIG.3, when there are 8 types of MCS numbers expressed with 3 bits, the MCS numbers of the 3 bits are output to the coding section 701.

The coding section 701 codes the MCS number bits to bits indicating combinations of spreading codes. Here, 3-bit MCS numbers are coded to combinations of 7-bit spreading codes. This is equivalent to coding MCS numbers at a coding rate of 3/8. Information on these combinations of 7-bit spreading codes is output to a spreading code specification section 112.

The spreading code specification section 112 specifies combinations of spreading codes that will express MCS numbers. For example, when DSCH is transmitted using spreading codes #1 to #20, the spreading code specification section 112 specifies 18 codes out of spreading codes #1 to #20. That is, the spreading code specification section 112 specifies spreading codes in combinations of 7-bit spreading codes. The combinations of 7-bit spreading codes are patterns indicating a situation of usage of spreading codes. With reference to a pattern indicating the situation of usage of a spreading code corresponding to a bit string of 7 bits, the spreading code specification section 112 specifies a spreading code used for that pattern.

Using spreading codes specified in this way allows the receiving side (communication terminal) to decide MCS blindly without sending MCS information.

The spreading code information specified by the spreading code specification section 112 is output to spreading sections 113 corresponding in number to the spreading codes (m). The spreading sections 113 carry out spreading/modulation processing on the transmission data distributed by a distribution section 111 using spreading codes specified respectively. The transmission data subjected to spreading/modulation processing by these spreading codes is multiplexed for 18 codes by the multiplexing section 117 and sent as a downlink signal to the communication terminal through multi-code transmission.

The operation after the downlink signal is subjected to despreading processing until power of the despread signal is detected is the same as that in Embodiment 1. The information on power values of the respective spreading codes is output to a spreading code detection section 206. The spreading code detection section 206 detects the spreading code used on the transmitting side (radio base station) from the information on the power values. That is, the power value of a spreading code used is large, whereas the power value of a spreading code not used is small.

The information on spreading codes used and detected in this way is output to the decoding section 801 as patterns of spreading codes used. In this case, the pattern of a spreading code used is output to the decoding section 801 as a bit string of 7 bits. The decoding section 801 decodes the bit string of 7 bits to a bit string of 3 bits indicating an MCS number. The decoded 3-bit string is output to an MCS detection section 207.

The MCS detection section 207 detects transmission parameters based on the MCS number corresponding to the 3-bit string. Furthermore, the MCS detection section 207 outputs information on the transmission parameters (modulation system and coding rate) corresponding to the detected MCS to demodulation sections 208 and a decoding section 210. More specifically, the MCS detection section 207 is provided with the correspondence table shown in FIG. 3 and outputs the modulation system and coding rate corresponding to the MCS number to the demodulation sections 208 and decoding section 210 respectively.

A selector 205 selects despread signals corresponding to the spreading codes used and outputs them to the demodulation sections 208. The demodulation sections 208 demodulate the despread signal according to the modulation system output from the MCS detection section 207. Furthermore, the decoding section 210 decodes the demodulated signal at the coding rate output from the MCS detection section 207. Received data is obtained in this way.

Thus, when the number of bits indicating MCS which are transmission parameters is smaller than the number of bits indicating combinations of spreading codes, this embodiment codes bits indicating MCS and uses them as bits indicating combinations of spreading codes, which makes the system resistant to transmission errors, reduces the possibility on the receiving side of erroneously detecting MCS information, and can thereby carry out HSDPA accurately.

### (Embodiment 3)

This embodiment will describe a case where when multicode transmission is carried out, MCS information of all transmission targets is expressed using combinations of spreading codes and sent at the same time.

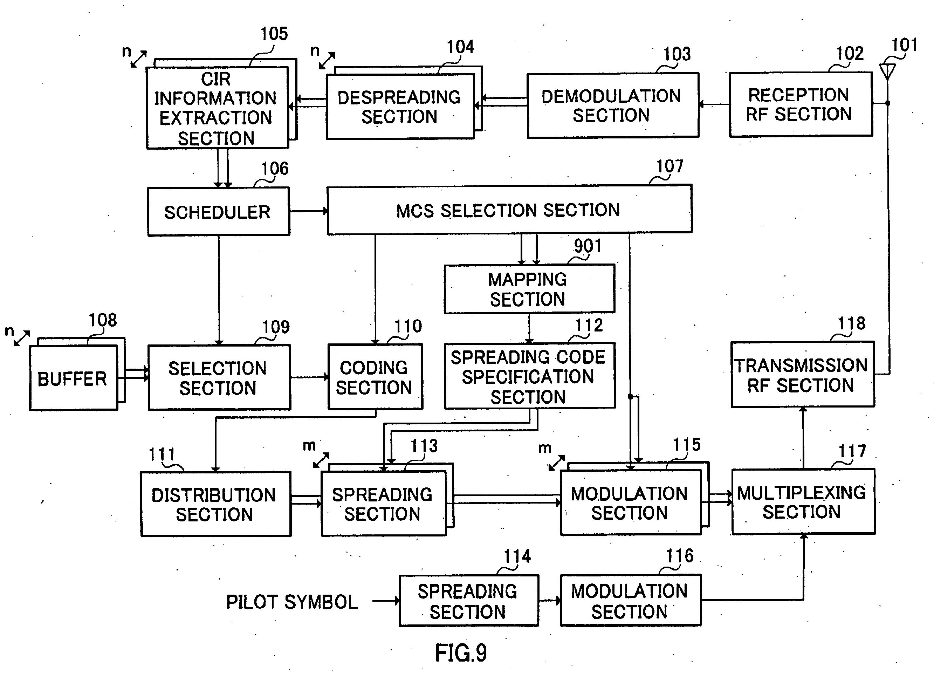

FIG.9 is a block diagram showing a configuration of a radio base station apparatus provided with a radio transmission apparatus according to Embodiment 3 of the present invention. In FIG.9, the same parts as those in FIG.1 are assigned the same reference numerals as those in FIG.1 and detailed explanations thereof will be omitted.

The radio base station apparatus shown in FIG.9 is provided with a mapping section that maps the MCS information determined by an MCS selection section 107 for selecting MCS information for each communication terminal to a pattern indicating a situation of usage of spreading codes.

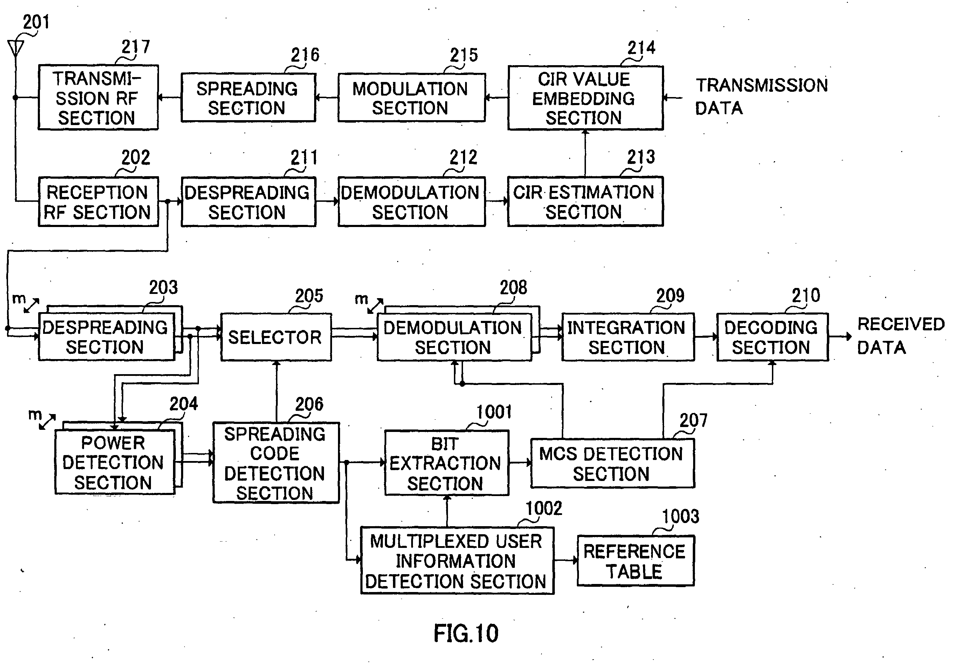

FIG.10 is a block diagram showing a configuration of a communication terminal apparatus provided with a radio reception apparatus according to Embodiment 3 of the present invention. In FIG.10, the same parts as those in FIG. 2 are assigned the same reference numerals as those in FIG.2 and detailed explanations thereof will be omitted.

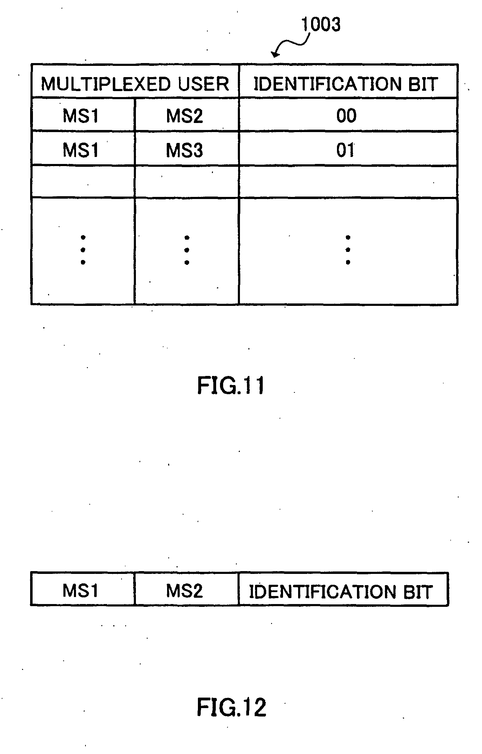

The communication terminal apparatus shown in FIG.10 is provided with a bit extraction section 1001 that extracts an identification bit from the pattern indicating a situation of usage of spreading codes and a multiplexed user information detection section 1002 that detects multiplexed user information using a reference table 1003 based on the identification bit. As shown in FIG.11, this reference table 1003 associates identification bits with multiplexed users. For example, in FIG.11, if an identification bit is "00", multiplexed users are MS1 and MS2, and if an identification bit is "01", multiplexed users are MS1 and MS3.

A case where an HSDPA-based communication is carried out between the radio base station apparatus and communication terminal apparatus in the above-described configuration without transmitting MCS information will be explained.

The operation after CIR information is sent as downlink channel quality information from each communication terminal to the radio base station over the uplink until a scheduler 106 at the radio, base station performs transmission assignment based on the respective CIR information and selects MCS according to the transmission assignment is the same as.that of Embodiment 1.

An MCS number determined at an MCS selection section 107 is output to the bit extraction section 1001. For example, when there are 8 types of MCS numbers and expressed with 3 bits as shown in FIG.3, the MCS numbers of 3 bits are output to the bit extraction section 1001. Here, a case where the number of multiplexed users is 2 will be explained.

The bit extraction section 1001 maps bits of MCS numbers of the respective users and further maps identification bits indicating information on the multiplexed users. For example, as shown in FIG.12, the MCS.number bit of MS1, MCS number bit of MS2 and identification bit are mapped. This mapped information is output to spreading code specification sections 112.

The spreading code specification sections 112 specify combinations of spreading codes that will express MCS numbers. For example, when DSCH is transmitted using spreading codes #1 to #20, the spreading code specification sections 112 specify 18 codes out of spreading codes #1 to #20. That is, the spreading code specification sections 112 specify spreading codes in combinations of 8-bit spreading codes. The combinations of 8-bit spreading codes (MCS number of MS1, MCS number of MS2, identification bit (00)) are patterns indicating a situation of usage of spreading codes. With reference to a pattern indicating the situation of usage of a spreading code corresponding to the bit string of 8 bits, the spreading code specification sections 112 specify a spreading code used for that pattern.

Using the spreading codes specified in this way allows the receiving side (communication terminal) to decide MCS blindly without sending MCS information.

The spreading code information specified by the spreading code specification sections 112 is output to spreading sections 113 corresponding in number to the spreading codes (m). The spreading sections 113 carry out spreading/modulation processing on the transmission data distributed by a distribution section 111 using spreading codes specified respectively. The transmission data subjected to spreading/modulation processing by these spreading codes is multiplexed for 18 codes by a multiplexing section 117 and sent to the communication terminal (MS1) as a downlink signal through multi-code transmission.

The operation after the downlink signal is subjected to despreading processing until power of the despread signal is detected is the same as that in Embodiment 1. The information on power values of the respective spreading codes is output to a spreading code section 206. The spreading code section 206 detects a spreading code used on the transmitting side (radio base station) from the information on the power values. That is, the power value of a spreading code used is large, whereas the power value of a spreading code not used is small.

The information on spreading codes used and detected in this way is output to the bit extraction section 1001 as patterns of spreading codes used. In this case, the pattern of a spreading code used is output to the bit extraction section 1001 as a bit string of 8 bits. The bit extraction section 1001 extracts an identification bit and outputs the identification bit to the multiplexed user information detection section 1002.

The user information detection section 1002 references the reference table 1003 from the identification bit "00" and recognizes that MS1 and MS2 aremultiplexed. Then, from the fact that MS1 is included, the user information detection section 1002 recognizes that MCS information of the own station is included. At this time, the user information detection section 1002 outputs a control signal indicating that the MCS information of the own station is included to the bit extraction section 1001.

Upon reception of the control signal indicating that the MCS information of the own station is included, the bit extraction section 1001 extracts the bit indicating the MCS number of MS1 and outputs the bit indicating the MCS number to an MCS detection section 207.

The MCS detection section 207 detects transmission parameters based on the MCS number corresponding to the 3-bit string. Furthermore, theMCS detection section 207 outputs information on the transmission parameters (modulation system and coding rate) corresponding to the detected MCS to a demodulation section 208 and a decoding section 210. More specifically, the MCS detection section 207 is provided with the correspondence table shown in FIG. 3 and outputs the modulation system and coding rate corresponding to the MCS number to the demodulation section 208 and decoding section 210.

The selector 205 selects despread signals corresponding to the spreading codes used and outputs them to the demodulation section 208. The demodulation section 208 demodulates the despread signal according to the modulation system output from the MCS detection section 207. Furthermore, the decoding section 210 decodes the demodulated signal at the coding rate output from the MCS detection section 207. Received data is obtained in this way.

Thus, when multicode transmission is carried out to a plurality of other stations, this embodiment expresses MCS information on all transmission targets using combinations of spreading codes and sends them simultaneously and thereby eliminates the need to send MCS information to respective users individually. This also eliminates the need to send MCS information with power corresponding to multiplexed users as in the case of the prior art, and can thereby further increase the capacity of the downlink.

The present invention is not limited to above-described Embodiments 1 to 3, but can be implemented with various modifications. More specifically, the number of spreading codes used in multicode transmission, number of combinations, number of users, number of transmission parameters (MCS number), etc., are not limited to above-described Embodiments 1 to 3, but can be implemented with various modifications as appropriate. For example, with regard to the number of users, the above-described embodiment tentatively has set the number of users to 2, but the present invention can be implemented also when the number of users is 1.

When the number of users is 1, the base station carries out no assignment of transmission targets, but it is possible to send MCS information to the user using the same method as that described above. Furthermore, when such a one-to-one communication is carried out, if a configuration that the base station corresponds to the receiving side and the user (communication terminal) is the transmitting side is adopted, the communication terminal can also select MCS information and send it to the base station according to the same method as that described above.

As stated above, the radio transmission apparatus and radio reception apparatus according to the present invention specify combinations of spreading codes indicating transmission parameters determined based on downlink channel quality information which is reported from transmission targets and send data to transmission targets through multi-code transmission using transmission parameters and combinations of spreading codes, and can thereby prevent a reduction of capacity of the downlink due to transmission of transmission parameters or an increase of interference with other stations.

This application is based on the Japanese Patent Application No. 2001-195473 filed on June 27, 2001, entire content of which is expressly incorporated by reference herein.

### Industrial Applicability

The present invention is applicable to a mobile station apparatus and base station apparatus in a digital radio communication system.

## Claims

1. A radio transmission apparatus comprising:
a transmission target assignment section that assigns a transmission target based on downlink channel quality information sent over an uplink;
a parameter determining section that determines transmission parameters based on the downlink channel quality information reported from said transmission target;
a spreading code specification section that specifies combinations of spreading codes expressing said transmission parameters; and
a transmission section that sends data to said transmission target using said transmission parameters and said combinations of spreading codes through multi-code transmission.

2. The radio transmission apparatus according to claim 1, wherein transmission parameter numbers used for data transmission are associated with spreading code numbers not used for data transmission during data transmission.

3. The radio transmission apparatus according to claim 1, wherein transmission parameters are expressed using some of the spreading codes used for data transmission as combinations of spreading codes.

4. The radio transmission apparatus according to claim 1, further comprising a coding section that codes, when the number of bits indicating transmission parameters is smaller than the number of bits indicating combinations of spreading codes, bits indicating said transmission parameters and use the bits as bits indicating combinations of spreading codes.

5. The radio transmission apparatus according to claim 1, further comprising a mapping section that expresses transmission parameters of all transmission targets using combinations of spreading codes.

6. A radio base station apparatus comprising the radio transmission apparatus according to claim 1.

7. A radio reception apparatus comprising:
a despreading section that carries out despreading processing on a downlink signal using combinations of spreading codes expressing transmission parameters and outputs a despread signal;
a.level detection section that detects the level of said despread signal;
a transmission parameter detection section that detects said transmission parameters from said level; and
a received data output section that obtains received data using said transmission parameters.

8. The radio reception apparatus according to claim 7, further comprising a decoding section that decodes, when the number of bits indicating transmission parameters is smaller than the number of bits indicating combinations of spreading codes, bits indicating said coded transmission parameters to acquire bits indicating transmission parameters.

9. The radio reception apparatus according to claim 7, further comprising a transmission parameter detection section that detects whether transmission parameters of the own station are included in combinations of spreading codes or not.

10. A communication terminal apparatus comprising the radio reception apparatus according to claim 7.

11. A radio transmission method comprising:
a transmission target assigning step of assigning a transmission target based on downlink channel quality information sent over an uplink;
a parameter determining step of determining transmission parameters based on the downlink channel quality information reported from said transmission target;
a spreading code specifying step of specifying combinations of spreading codes expressing said transmission parameters; and
a transmitting step of transmitting data to said transmission target using said transmission parameters and said combinations of spreading codes through multi-code transmission.

12. The radio transmission method according to claim 11, further comprising a coding step of coding, when the number of bits indicating transmission parameters is smaller than the number of bits indicating combinations of spreading codes, bits indicating said transmission parameters and using the bits as bits indicating combinations of spreading codes.

13. The radio transmission method according to claim 11, further comprising a mapping step of expressing transmission parametersofalltransmissiontargetsusing combinations of spreading codes.

14. A radio reception method comprising:
a despreading step of carrying out despreading processing on a downlink signal using combinations of spreading codes expressing transmission parameters and outputting a despread signal;
a level detecting step of detecting the level of said despread signal;
a transmission parameter detecting step of detecting said transmission parameters from said level; and
a received data outputting step of obtaining received data using said transmission parameters.

15. The radio reception method according to claim 14, further comprising a decoding step of decoding, when the number of bits indicating transmission parameters is smaller than the number of bits indicating combinations of spreading codes, bits indicating said coded transmission parameters to acquire bits indicating transmission parameters.

16. The radio reception method according to claim 14, further comprising a transmission parameter detecting step of detecting whether transmission parameters of the own station are included in combinations of spreading codes or not.

17. A radio transmission apparatus comprising:
a parameter determining section that determines transmission parameters based on channel quality information reported from a transmission target;
a spreading code specification section that specifies combinations of spreading codes expressing said transmission parameters; and
a transmission section that sends data to said transmission target using said transmission parameters and said combinations of spreading codes through multi-code transmission.

18. A radio transmission method comprising:
a parameter determining step of determining transmission parameters based on channel quality information reported from a transmission target;
a spreading code specifying step of specifying combinations of spreading codes expressing said transmission parameters; and
a transmitting step of transmitting data to said transmission target using said transmission parameters and said combinations of spreading codes through multi-code transmission.
